# EUROPEAN PATENT SPECIFICATION

(11) **EP 3 310 452 B1**
(45) Date of publication and mention of the grant of the patent: **13.11.2019**
(21) Application number: 16811080.7
(22) Date of filing: 17.05.2016
(51) Int. Cl.: B01D 21/20, B01D 21/06

(54) **METHOD AND APPARATUS IN A CIRCULAR PROCESSING SPACE**
VERFAHREN UND VORRICHTUNG IN EINEM KREISFÖRMIGEN BEARBEITUNGSRAUM
PROCÉDÉ ET APPAREIL DANS UN ESPACE DE TRAITEMENT CIRCULAIRE

(30) Priority: 16.06.2015 FI 20155463
(43) Date of publication of application: 25.04.2018
(73) Proprietor: Finnchain Oy, 26510 Rauma (FI)
(72) Inventor: KOSUNEN, Kimmo, 23500 Uusikaupunki (FI); ARONEN, Tomi, 28660 Pori (FI); TUOMIKOSKI, Pekka, 26100 Rauma (FI); TUOMIKOSKI, Leena, 26100 Rauma (FI)
(74) Representative: Kangasmäki, Reijo Holger
(86) International application number: PCT/FI2016/050323
(87) International publication number: WO 2016/203099

(56) References cited:
- WO-A1-03/095061
- WO-A1-03/095061
- WO-A1-2008/071033
- WO-A1-2011/016067
- WO-A1-2011/016067
- WO-A1-2013/028123
- DE-A1- 4 412 647
- ES-A1- 2 391 018
- SE-C2- 523 146
- SE-C2- 523 146
- US-A- 2 149 313

## Description

The invention relates to a method and apparatus in a circular processing space according to the preambles of the independent claims directed thereto.

Circular settling tanks of the above type have been used already for a very long time with traditional technical solutions. Thus, first of all, a bottom of a settling tank is usually banked down towards its centre, the outlet chute for bottom sludge being located at the centre of the settling tank. The mechanical processing means used in the above type of traditional settling tanks consist usually of bottom scrapers existing at the bottom of the processing space and surface scrapers moving on the surface of the processing space. The processing means mentioned above are carried out traditionally for example in a way that the settling tank has an overhead drive bridge rotating around a the center of the processing tank, with the which surface scrapers are coupled. The surface scrapers are connected for example by using stiff bars with the bottom scrapers in order to move the same in phase with the surface scrapers.

Particularly in international patent application publication WO 03/095061 there has been presented a solution differing from the above described. In this solution, a bottom scraper is coupled by its first end stationarily with an auxiliary frame being coupled rotatively at a center of a processing space, wherein it is being moved by means of a power transmission arrangement being in a power transmitting connection with its other end. The power transmission arrangement comprises an endless power transmission chain that moves in connection with walls of the processing space by influence of operating means through a drive and idle wheel arrangement. The one or more surface scrapers being used in this solution are arranged movable together with bottom scrapers being connected therewith with stiff bars. This publication concerns a solution that makes more efficient particularly functioning of the surface scrapers, which for its part has significantly raised the level of prior art in the operating purpose in question.

Other similar examples of transmission arrangements driving bottom scrapers can be found in SE523146 C2, DE4412647 A1 and US 2149313 A.

Particularly in the operating purpose mentioned above there has been found a problem in practice due to strain directed to the chain of the power transmission arrangement that moves the one or more bottom scrapers, which strains are further enhanced when coupling the surface scrapers that are arranged movable as described above through couplings thereof with the bottom scrapers. In this case, a high strain is directed to the power transmission chain when the drive takes place at one point by a single drive wheel, which is why on the other hand a structurally very strong chain construction and on the other hand a high output power from a motor driving the chain is required. One practical problem in this context is furthermore the fact that in a malfunctioning of a motor, the drive of the chain and due to the same naturally also movement of the scrapers is interrupted for the time that the service measure of the drive motor requires.

The method and apparatus according to the present invention are intended to provide a decisive improvement regarding the above-discussed problems and hence to raise essentially the level of prior art. In order to implement this object, the method and apparatus of the invention are principally characterized by what has been presented in the characterizing parts of the independent claims directed thereto.

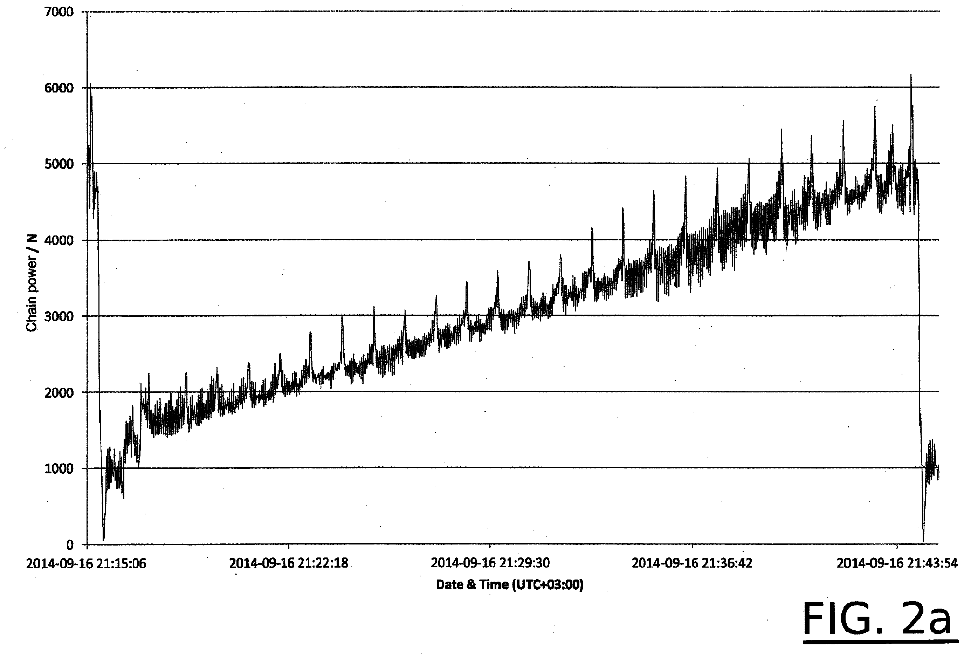

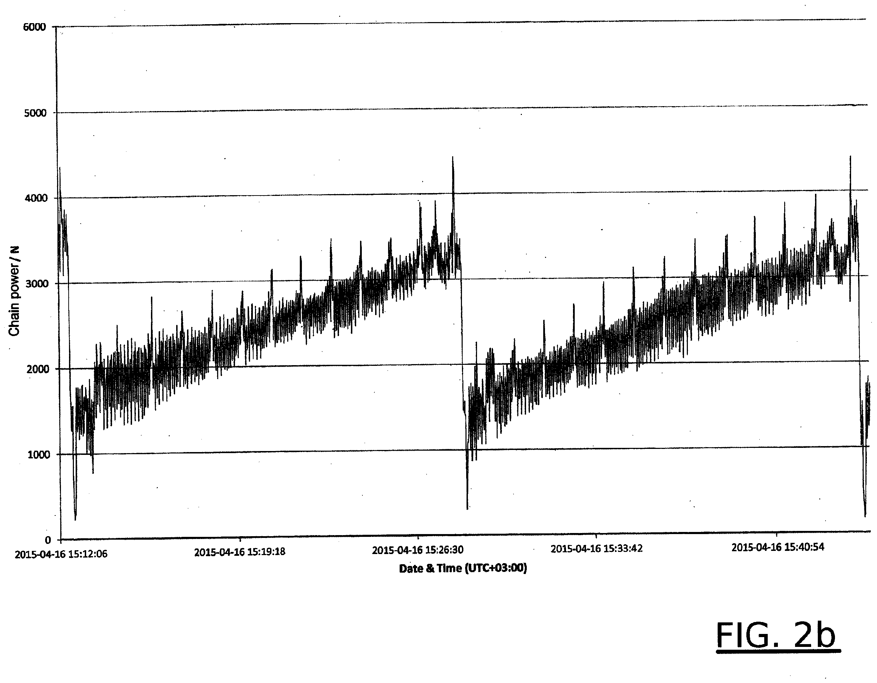

The most important benefits offered by the method and apparatus according to the invention include the simplicity, reliability and efficiency of constructions enabled by the invention, of the stock equipment applicable for the same and of functioning thereof, wherein thanks to the so-called twin drive of the power transmission chain, first of all output power of the process devices as well as need for service and maintenance of a circular processing space can be minimized. Thanks to the invention it is thus possible to halve strains directed to the power transmission chain with respect to a traditional implementation, as can be seen from the measuring results of a traditional chain drive and a twin-drive according to the invention as shown in figures 2a and 2b. The invention enables thus furthermore optimizing of the chain structure for each operating purpose at any given time, thanks to which the drive output power needed for moving of the bottom scrapers can be minimized.

In an implementation according to the invention, synchronization of the operating motors driving each drive wheel is of essential importance, which is implemented by using frequency converter operated electric motors. In this case the invention has furthermore such an advantage that, when experiencing a malfunction of one drive motor, the functioning of the process apparatus needs not to be interrupted, but instead it can still be used by the second drive motor. In this case, thanks to the frequency converter operated use, it is possible to compensate the higher load directed to the second drive motor by decreasing the rotational speed of the electric motor in question, in which case torque produced by the same increases respectively, thanks to which functioning of the process apparatus does not cause a problem in this respect, either, nor extra wear of the stock of equipment in practice.

Preferred embodiments for the method and apparatus of the invention are disclosed in the dependent claims directed thereto.

The invention will now be described in detail with reference to the accompanying drawings, wherein
- figures 1a and 1b: show as an exemplary cross-sectional view and as a view from above a circular processing space, such as a settling tank, in which the invention has been utilized,
- figure 2a and 2b: show chain power that is directed to a power transmission chain being used in a traditional way during one revolution of a bottom scraper being affixed thereto, and a corresponding presentation of chain power directed to a power transmission chain being used according to the invention,
- figure 3: shows an exemplary electric circuit diagram of an apparatus according to the invention,
- figure 4: shows a cross-sectional view along with moving direction of the bottom scraper of the processing space, when using a power transmission chain with a customary height, and
- figures 5a and 5b: show end views of a bottom scraper, when viewed in a perpendicular direction to the moving direction of a bottom scraper with a customary operating height (fig. 5a) and with an elevated operating height (fig. 5b) of a power transmission chain.

The invention relates to a method in connection with an apparatus to be used in a circular processing space 1, such as a settling tank or the like, wherein the apparatus comprises mechanical processing means at least for guiding sludge present on a bottom of the processing space 1 out of the processing space by means of one or more bottom scrapers 2a rotatable around a center x of the processing space through a bottom outlet arrangement 3 present at the bottom of the processing space, wherein the bottom scraper is coupled by its first end stationarily with an auxiliary frame A at the center X of the processing space. The bottom scraper 2a is being moved by means of a power transmission arrangement being in a power transmitting connection with its other end, the power transmission arrangement comprising an endless power transmission chain 5 that moves in connection with walls of the processing space 1 by influence of operating means KK through a drive and idle wheel arrangement 4a, 4b. The power transmission chain 5 is being moved by a power transmission arrangement that comprises at least two apart from each other placed drive wheels 4a',4a" particularly in order to minimize strain directed to the power transmission chain 5.

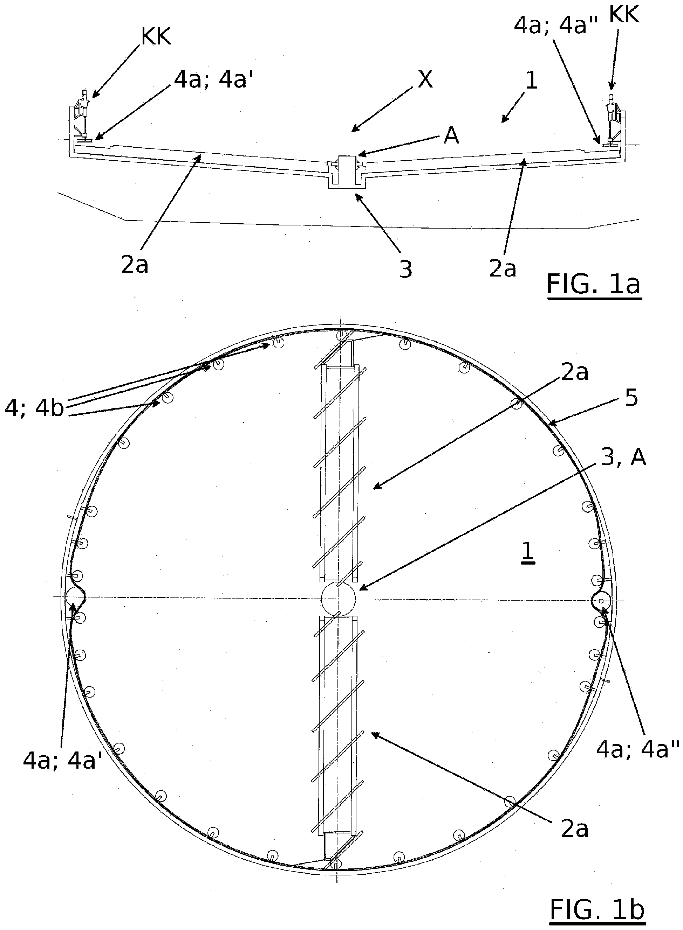

As an advantageous embodiment of the method according to the invention particularly with reference to figure 1, the power transmission chain 5 is being moved by means of two drive wheels 4a', 4a" existing at opposite sides of the processing space 1. From the measuring results shown in figures 2a and 2b can be seen that when the invention is being utilized, thanks to the twin-drive according the invention, the chain power directed to the power transmission chain 5 can be halved, which enables thus making lighter the structure of a chain, particularly being manufactured from plastic material, in respect with customary chain drive principle.

As a furthermore advantageous embodiment of the method according to the invention, as the operating means KK driving the drive wheels 4a', 4a", in respect with each other separate electric, pressure medium operated and/or combustion operated motors are being used.

According to the invention, rotational speeds of the drive wheels 4a', 4a" are being synchronized in respect with each other by using frequency converter operated T electric motors M. When using particularly frequency converter operated electric motors, the functioning as a whole of a process apparatus can be optimized e.g. with a view to malfunctioning situations of the electric motors in a way that when one of the electric motors is out of use, the functioning of the process can be kept running without disruption while using the electric motor being still in use when needed by decreasing its rotational speed, thanks to which the output power of the electric motor in question can be when needed increased respectively.

The invention relates on the other hand also to an apparatus in a circular processing 1, such as a settling tank or a like, wherein the apparatus comprises mechanical processing means at least for guiding sludge present on a bottom of the processing space 1 out of the processing space by means of one or more bottom scrapers 2a rotatable around a center x of the processing space through a bottom outlet arrangement 3 present at the bottom of the processing space. The bottom scraper is coupled by its first end stationarily with an auxiliary frame A at the center X of the processing space, wherein it is arranged movable by means of a power transmission arrangement being in a power transmitting connection with its other end, the power transmission arrangement comprising an endless power transmission chain 5 that moves in connection with walls of the processing space 1 by influence of operating means KK through a drive and idle wheel arrangement 4a,4b. The power transmission arrangement comprises at least two apart from each other placed drive wheels 4a',4a" particularly in order to minimize strain directed to the power transmission chain 5.

As an advantageous embodiment of the apparatus according to the invention, drive of the power transmission chain 5 is arranged by two drive wheels 4a', 4a" existing at opposite sides of the processing space 1.

As a furthermore advantageous embodiment of the apparatus according to the invention, the operating means KK driving the drive wheels 4a', 4a" comprise in respect with each other separate electric, pressure medium operated and/or combustion operated motors.

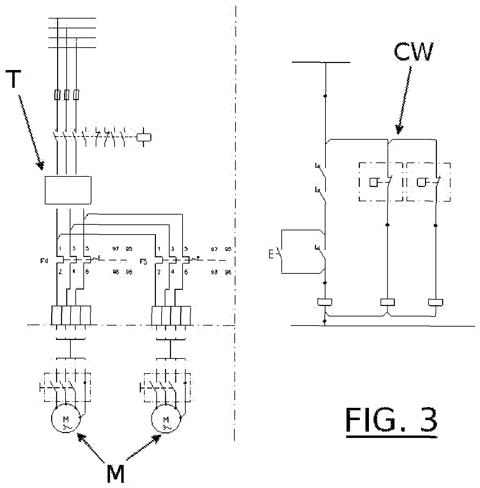

According to the invention with reference to the exemplary electric wiring diagram shown in figure 3, rotational speeds of the drive wheels 4a', 4a" are synchronized with each other by using frequency converter operated T electric motors M. In the diagram in question with a reference sign CW is furthermore shown a chain guard arrangement of the power transmission chain to be operated with low-voltage, e.g. 24V.

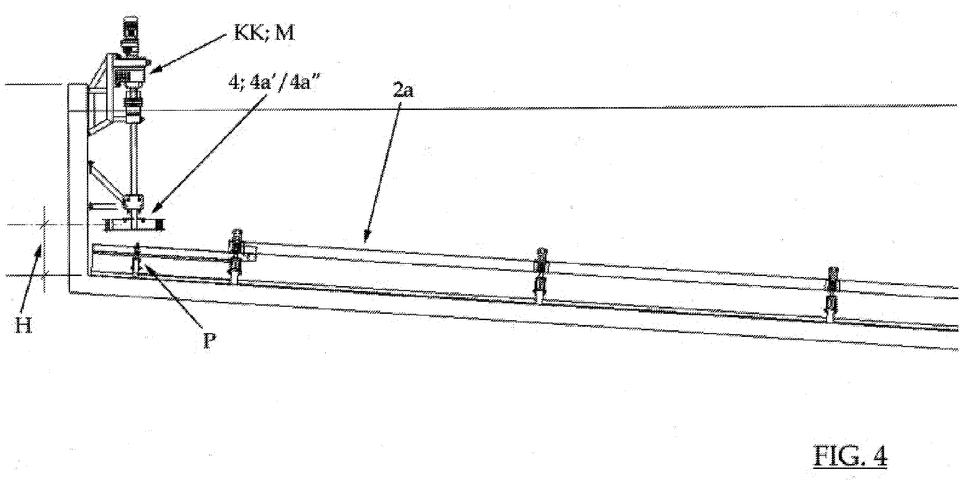

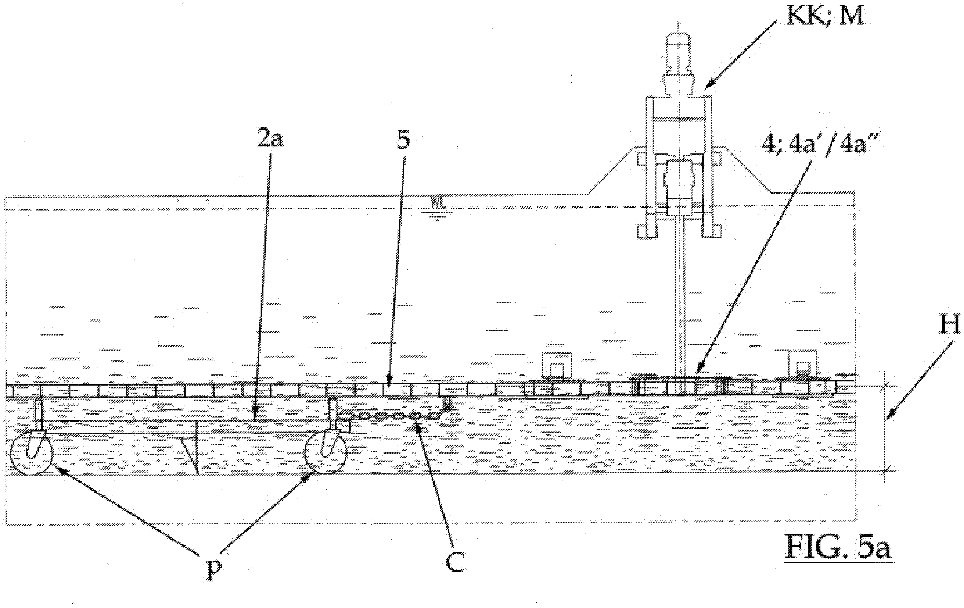

With reference to the cross sectional-view along with the movement of the bottom scraper as shown in figure 4, the power transmission chain 5 is placed usually at a height of approximately 500mm from the bottom of the processing space. The bottom scraper 2A is arranged movable particularly with reference to figure 5A by moving the same on the bottom of the processing space 1 aided by wheels p through power being transmitted thereto from the power transmission chain 5 by means of a pulling organ C such as a link chain.

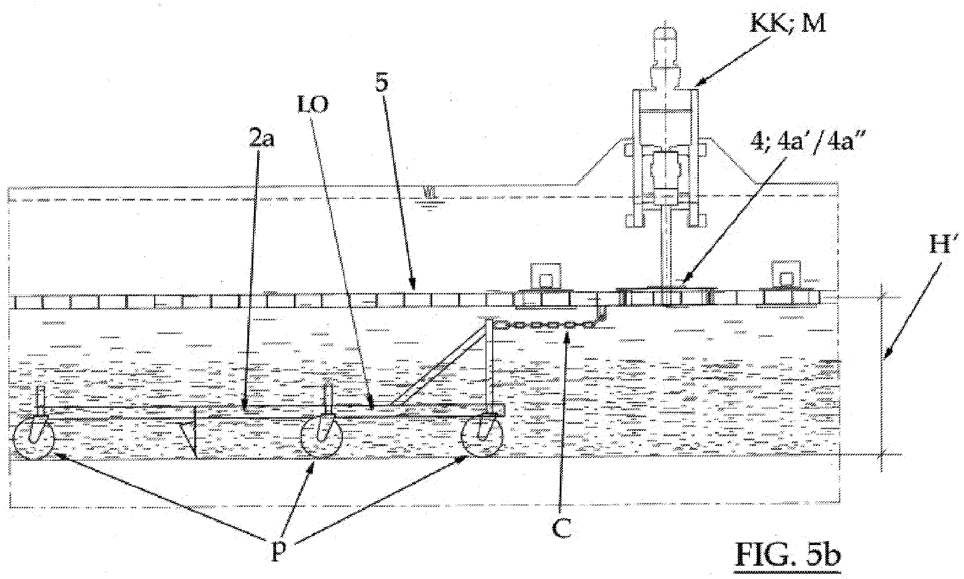

In the embodiment shown in figure 5b, the power transmission chain 5 is arranged to be operated with an elevated movement height H' of 800-1800mm, preferably 1000-1500mm, from the bottom of the processing space 1, wherein the driving end of the bottom scraper 1 is provided with an extension part LO equipped with a wheel P in order to stabilize movement of the bottom scraper due to its drive occurring with the elevated height.

The elevated operating height H' of the power transmission chain is needed in processing spaces particularly disclosing wearing components, such as sand, in which case thanks to the elevated use wearing of the chain due to the impurities can be efficiently minimized. Depending of the total height of the processing space the elevated movement height H' of the power transmission chain 5 is e.g. between 800-1800mm, preferably 1000-1500mm.

It is clear that the invention is not limited to the embodiments depicted or described above, but instead it can be subjected to variations within the basic inventive concept in accordance with given conditions and operating requirements. Thus, first of all, it is self-evident that small-sized processing spaces can be provided e.g. with just one bottom scraper and possibly a surface scraper coupled therewith. Furthermore the power transmission chain may be manufactured e.g. from metal, reinforced plastic, or from composite material, being modified particularly to suit the operating purpose at any given time.

## Claims

1. Method in connection with an apparatus to be used in a circular processing space (1), such as a settling tank or a like, wherein the apparatus comprises mechanical processing means at least for guiding sludge present on a bottom of the processing space (1) out of the processing space by means of one or more bottom scrapers (2a) rotatable around a center (x) of the processing space through a bottom outlet arrangement (3) present at the bottom of the processing space, wherein the bottom scraper is coupled by its first end stationarily with an auxiliary frame (A) at the center (X) of the processing space and, wherein it is being moved by means of a power transmission arrangement being in a power transmitting connection with its other end, the power transmission arrangement comprising an endless power transmission chain (5) that moves in connection with walls of the processing space (1) by influence of operating means (KK) through a drive and idle wheel arrangement (4a,4b), **characterized, in that** the power transmission chain (5) is being moved by a power transmission arrangement that comprises at least two in respect with each other separately placed drive wheels (4a',4a") particularly in order to minimize strain directed to the power transmission chain (5),wherein rotational speeds of the drive wheels (4a', 4a") are being synchronized in respect with each other by using at least two frequency converter operated (T) electric motors (M).

2. Method according claim 1, **characterized in that**, the power transmission chain (5) is being moved by means of two drive wheels (4a', 4a") existing at opposite sides of the processing space (1).

3. Apparatus in a circular processing space (1), such as a settling tank or a like, wherein the apparatus comprises mechanical processing means at least for guiding sludge present on a bottom of the processing space (1) out of the processing space by means of one or more bottom scrapers (2a) rotatable around a center (x) of the processing space through a bottom outlet arrangement (3) present at the bottom of the processing space, wherein the bottom scraper is coupled by its first end stationarily with an auxiliary frame (A) at the center (X) of the processing space and, wherein it is arranged movable by means of a power transmission arrangement being in a power transmitting connection with its other end, the power transmission arrangement comprising an endless power transmission chain (5) that moves in connection with walls of the processing space (1) by influence of operating means (KK) by transmission of a drive and idle wheel arrangement (4a,4b), **characterized, in that** the power transmission arrangement comprises at least two apart from each other placed drive wheels (4a',4a") particularly in order to minimize strain directed to the power transmission chain (5), wherein the operating means (KK) comprise at least two frequency converter operated (T) electric motors (M)for synchronizing rotational speeds of the drive wheels (4a', 4a").

4. Apparatus according claim 3, **characterized in that**, drive of the power transmission chain (5) is arranged movable by two drive wheels (4a', 4a") existing at opposite sides of the processing space (1) .

5. Apparatus according to claim 3 or 4, **characterized in that**, the power transmission chain (5) is arranged to be operated with an elevated movement height (H') of 800-1800mm, preferably 1000-1500mm, from the bottom of the processing space 1.

6. Apparatus according to any of the preceding claims 3-5, **characterized in that**, a driving end of a bottom scraper (1) is provided with an extension part (LO) in order to stabilize movement of the bottom scraper due to its drive occurring with the elevated height of movement (H').

## Patentansprüche

1. Verfahren in Verbindung mit einer Vorrichtung zur Verwendung in einem kreisförmigen Bearbeitungsraum (1), wie beispielsweise einem Absetzbecken oder dergleichen, wobei die Vorrichtung mechanische Bearbeitungsmittel umfasst, um Schlamm auf einem Boden des Bearbeitungsraums (1) mittels eines oder mehrerer Bodenräumer (2a), die um eine Mitte (x) des Bearbeitungsraums drehbar sind, durch eine am Boden des Bearbeitungsraums vorhandene Bodenauslassanordnung (3) aus dem Bearbeitungsraum abzuleiten, wobei der Bodenräumer durch sein erstes Ende fest mit einem Hilfsrahmen (A) in der Mitte (X) des Bearbeitungsraums verbunden ist und mittels einer Kraftübertragungsanordnung bewegt wird, die in einer kraftübertragenden Verbindung mit seinem anderen Ende steht und eine endlose Kraftübertragungskette (5) umfasst, die sich in Verbindung mit Wänden des Bearbeitungsraumes (1) durch den Einfluss von Betriebsmitteln (KK) über eine Antriebs- und Zwischenradanordnung (4a, 4b) bewegt, **dadurch gekennzeichnet, dass** die Kraftübertragungskette (5) durch eine Kraftübertragungsanordnung bewegt wird, die mindestens zwei voneinander beabstandete Antriebsräder umfasst (4a',4a"), insbesondere um die auf die Kraftübertragungskette (5) gerichtete Belastung zu minimieren, wobei die Drehgeschwindigkeiten der Antriebsräder (4a',4a") unter Verwendung von mindestens zwei frequenzumrichterbetriebenen (T) Elektromotoren (M) miteinander synchronisiert werden.

2. Verfahren nach Anspruch 1, **dadurch gekennzeichnet, dass** die Kraftübertragungskette (5) mittels zweier Antriebsräder (4a',4a") an gegenüberliegenden Seiten des Bearbeitungsraums (1) bewegt wird.

3. Vorrichtung in einem kreisförmigen Bearbeitungsraum (1), wie beispielsweise einem Absetzbecken oder dergleichen, wobei die Vorrichtung mechanische Bearbeitungsmittel umfasst, um Schlamm auf einem Boden des Bearbeitungsraums (1) mittels eines oder mehrerer Bodenräumer (2a), die um eine Mitte (x) des Bearbeitungsraums drehbar sind, durch eine am Boden des Bearbeitungsraums vorhandene Bodenauslassanordnung (3) aus dem Bearbeitungsraum abzuleiten, wobei der Bodenräumer durch sein erstes Ende fest mit einem Hilfsrahmen (A) in der Mitte (X) des Bearbeitungsraums verbunden ist und mittels einer Kraftübertragungsanordnung, die in einer kraftübertragenden Verbindung mit seinem anderen Ende steht, beweglich angeordnet ist, wobei die Kraftübertragungsanordnung eine endlose Kraftübertragungskette (5) umfasst, die sich in Verbindung mit Wänden des Bearbeitungsraumes (1) unter dem Einfluss von Betriebsmitteln (KK) durch Übertragung einer Antriebs- und Zwischenradanordnung (4a,4a) bewegt, **dadurch gekennzeichnet, dass** die Kraftübertragungsanordnung mindestens zwei voneinander beabstandete Antriebsräder umfasst (4a',4a"), insbesondere um die auf die Kraftübertragungskette (5) gerichtete Belastung zu minimieren, wobei die Betriebsmittel (KK) mindestens zwei frequenzumrichterbetriebene (T) Elektromotoren (M) zum Synchronisieren der Drehgeschwindigkeiten der Antriebsräder (4a',4a") umfassen.

4. Vorrichtung nach Anspruch 3, **dadurch gekennzeichnet, dass** der Antrieb der Kraftübertragungskette (5) durch zwei Antriebsräder (4a',4a") an gegenüberliegenden Seiten des Bearbeitungsraums (1) beweglich angeordnet ist.

5. Vorrichtung nach Anspruch 3 oder 4, **dadurch gekennzeichnet, dass** die Kraftübertragungskette (5) so angeordnet ist, dass sie mit einer erhöhten Bewegungshöhe (H') von 800-1800 mm, vorzugsweise 1000-1500 mm, vom Boden des Bearbeitungsraums 1 aus betrieben werden kann.

6. Vorrichtung nach einem der vorhergehenden Ansprüche 3-5, **dadurch gekennzeichnet, dass** ein Antriebsende eines Bodenräumers (1) mit einem Verlängerungsteil (LO) versehen ist, um die Bewegung des Bodenräumers zu stabilisieren, da sein Antrieb mit der erhöhten Bewegungshöhe (H') erfolgt.

## Revendications

1. Procédé lié à un appareil à utiliser dans un espace de traitement circulaire (1) tel qu'une cuve de décantation ou similaire, dans laquelle l'appareil comprend des moyens de traitement mécanique au moins pour guider les boues présentes au fond de l'espace de traitement (1) hors de l'espace de traitement au moyen d'un ou plusieurs racleurs de fond (2a) pivotant autour du centre (x) de l'espace de traitement via un dispositif de sortie (3) présent au fond de l'espace de traitement, dans lequel le racleur de fond est accouplé à sa première extrémité de façon stationnaire à un cadre auxiliaire (A) au centre (X) de l'espace de traitement et dans laquelle le racleur de fond est activé au moyen d'un dispositif de transmission d'énergie étant dans une connexion de transmission d'énergie avec son autre extrémité, le dispositif de transmission d'énergie se composant d'une chaîne de transmission d'énergie sans fin (5) qui bouge par rapport aux parois de l'espace de traitement (1) sous l'influence d'organes de commande (KK) via un dispositif d'entraînement et de roue asservie (4a,4b), **caractérisé par le fait que** la chaîne de transmission d'énergie (5) est activée par un dispositif de transmission d'énergie composé au moins de deux roues d'entraînement placées séparément l'une de l'autre (4a', 4a") en particulier dans le but de minimiser la tension exercée sur la chaîne de transmission d'énergie (5), dans lequel les vitesses de rotation des roues d'entraînement (4a', 4a") sont synchronisées entre elles à l'aide d'au moins deux moteurs électriques (M) opérés par convertisseur de fréquence (T) .

2. Procédé décrit dans la revendication 1, **caractérisé par le fait que** la chaîne de transmission d'énergie (5) est activée au moyen de deux roues d'entraînement (4a', 4a") installées aux côtés opposés de l'espace de traitement (1).

3. Appareil dans un espace de traitement circulaire (1) tel qu'une cuve de décantation ou similaire, dans laquelle l'appareil comprend des moyens de traitement mécanique au moins pour guider les boues présentes au fond de l'espace de traitement (1) hors de l'espace de traitement au moyen d'un ou plusieurs racleurs de fond (2a) pivotant autour du centre (x) de l'espace de traitement via un dispositif de sortie (3) présent au fond de l'espace de traitement, dans lequel le racleur de fond est accouplé à sa première extrémité de façon stationnaire à un cadre auxiliaire (A) au centre (X) de l'espace de traitement et dans laquelle il est rendu mobile au moyen d'un dispositif de transmission d'énergie étant dans une connexion de transmission d'énergie avec son autre extrémité, le dispositif de transmission d'énergie se composant d'une chaîne de transmission d'énergie sans fin (5) qui bouge par rapport aux parois de l'espace de traitement (1) sous l'influence d'organes de commande (KK) par transmission d'un dispositif d'entraînement et de roue asservie (4a,4b), **caractérisé par le fait que** le dispositif de transmission d'énergie comprend au moins de deux roues d'entraînement placées séparément l'une de l'autre (4a', 4a") en particulier dans le but de minimiser la tension exercée sur la chaîne de transmission d'énergie (5), dans lequel les organes de commande (KK) comprennent au moins deux moteurs électriques (M) opérés par convertisseur de fréquence (T) pour la synchronisation des vitesses de rotation des roues d'entraînement (4a', 4a").

4. Appareil décrit dans la revendication 3, **caractérisé par le fait que** l'entraînement de la chaîne de transmission d'énergie (5) est rendu mobile au moyen de deux roues d'entraînement (4a', 4a") installées aux côtés opposés de l'espace de traitement (1).

5. Appareil décrit dans la revendication 3 ou 4, **caractérisé par le fait que** la chaîne de transmission d'énergie (5) est conçue pour être activée avec une augmentation de la hauteur de mouvement (H') de 800 à 1800 mm, de préférence de 1000 à 1500 mm, depuis le fond de l'espace de traitement (1).

6. Appareil décrit dans une quelconque des revendications précédentes 3 à 5, **caractérisé par le fait qu'**une extrémité d'entraînement d'un racleur de fond (1) est pourvue d'une pièce d'extension (LO) afin de stabiliser le mouvement du racleur de fond dû à son entraînement causé par l'augmentation de la hauteur du mouvement (H').
